(19) Europäisches Patentamt

**European Patent Office**

**Office européen des brevets**

(11) Publication number: **0 336 433 B1**

(12) **EUROPEAN PATENT SPECIFICATION**

(45) Date of publication of patent specification: **02.02.94** (51) Int. Cl.⁵: **A01N 25/02**

(21) Application number: **89106155.8**

(22) Date of filing: **07.04.89**

Consolidated with 89904198.2/0364554
(European application No./publication No.) by
decision dated 13.05.92.

(54) **Plant protecting agent.**

(30) Priority: **07.04.88 HU 172388**

(43) Date of publication of application:
**11.10.89 Bulletin 89/41**

(45) Publication of the grant of the patent:
**02.02.94 Bulletin 94/05**

(84) Designated Contracting States:
**AT CH DE ES FR GB GR IT LI NL SE**

(56) References cited:
**EP-A- 0 113 525**
**GB-A- 2 029 226**
**GB-A- 2 058 569**
**US-A- 4 617 318**

(73) Proprietor: **CHINOIN Gyogyszer és Vegyészeti Termékek Gyára RT.**
**To utca 1-5**
**H-1045 Budapest IV(HU)**

(72) Inventor: **Szeg , András, Dr.**
**Krudy u. 3**
**H-1088 Budapest(HU)**
Inventor: **Pap, Lászl , Dr.**
**Vadon u. 19**
**H-1112 Budapest(HU)**

Inventor: **Nagy, Lajos**
**Vásárhelyi u. 16**
**H-2000 Szentendre(US)**
Inventor: **Somfai, Eva, Dr.**
**Táncsics u. 8**
**H-1014 Budapest(US)**
Inventor: **Szycsány, György**
**D zsa Gy. u. 44**
**H-1224 Budapest(US)**
Inventor: **Székely, István, Dr.**
**Krajcér u. 6**
**H-2130 Dunakeszi(US)**
Inventor: **Deák, Anikp, Dr.**
**Erzsébet K. u. 93/b**
**H-1142 Budapest(HU)**
Inventor: **Hegedüs, Agnes**
**Tenkes u. 11/b**
**H-1225 Budapest(HU)**

(74) Representative: **Martin, Jean-Jacques et al**
**Cabinet REGIMBEAU**
**26, Avenue Kléber**
**F-75116 Paris (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The invention relates to plant protecting insecticidal ULV formulations containing interfacial tension modifying materials as further additives.

It is known that the LV (Low Volume) and ULV (Ultra Low Volume) spray application methods are the most advantageous and economical methods in the plant and forest protection. These formulations are applied in a very small amount (5 l/ha) without dilution or in a low aqueous dilution (5-100 l/ha) instead of the common high rate (600 l/ha) or medium rate (100-600 l/ha) dilutions (Matthews G.A.: Pest management, 1984, Longman, London and New York). The advantage of said treatments is that no water is required to prepare the spray and sometimes the ULV formulations are more active than the emulsion concentrates containing the same dose of active ingredient (J. Econ. Entomol., 1986, 79:202).

However the treatments using a preparation in an amount less than 5 l/ha (i.e. the ULV treatments) can ensure the suitable coverage - which in turn ensures the effective control of the pests - only if the spraying is carried out in a correct, optimal drop size distributin. The optimal drop size plays very often a more important role tnan the used dose (J. Econ. Entomol., 1987. 80:460) therefore generally special spray heads are used (e.g. Unirot, Autorot, Beecomist, MicroMax (DR4, Flak). The formulations are generally used without dilution and the active ingredients are dissolved in vegetable and/or mineral oils.

As mineral oil a mixture of aliphatic and aromatic hydrocarbons is used, the viscosity of which does not exceed the value of 50 cP and the flash point of which is above 60 °C (e.g. paraffin oil, Risella 917, Solvesso 200, HAN, Exxsol D 60).

The efficiency of the contact insecticides is also influenced by the durability of the drop to be found on the surface of the plant. The oils used in the ULV formulations spread gradually on the surface then penetrate into the epicuticular layer of wax of the plant. By this means the contact surfaces between the plant and the spray drop - and so the actual surfaces for the resorption of the active ingredient into the plant - are increasing, however the specific dose "available" for the insects may decrease which may slow down the intoxication.

It is known that the efficiency of the permethrin used in form of oily ULV formulation can be positively influenced by the retention time of the drop to be found on the surface of the leaf which can be followed by the change of the wetting angle (contact angle) (Pestic. Sci. 1984, 15:382). The wetting angle depends on the surface tension of the solid and liquid phases, on the interfacial tension and on the surface roughness (Szántó, P: The basis of the Collidal Chemistry, 1987, Publisher: Gondolat, Budapest.

### Summary of the invention

The invention relates to ULV plant protecting insecticidal formulations suitable for application in a very small amount, comprising 0.5 - 30 g/l of synthetic pyrethroids and/or phosphoric acid esters, thiophosphoric acid esters and/or dithiophosphoric acid esters in an amount of 0.5 - 300 g/l dissolved in a mixture comprising 2 - 300 g/l aliphatic hydrocarbons and sunflower oil in an amount necessary to 1000 ml and comprising further alkylaryl polyglycol ether in an amount of 2 - 100 g/l, preferably 15 - 60 g/l as additive enabling that the initial wetting (contact) angle of the formulation on the plant surface is greater than 13°, it is greater than 6° after 20 minutes and it is at least 2° after 120 minutes.

### Detailed description of the invention

The aim of our invention is to provide spray drops having a lengthened retention time by influencing the above mentioned factors and thereby to improve the efficacy of the ULV formulations.

The present invention is based on the recognition that the efficacy of certain ULV compositions in oil or in mixture of oils can be enhanced if said compositions contain suitable components for the modification of the penetration. The known ULV formulations used without dilution do not contain additives (tensides) for decreasing the interfacial tension.

The invention relates to ULV plant protecting insecticidal formulations suitable for application in a very small amount, comprising 0.5 - 30 g/l of synthetic pyrethroids and/or phosphoric acid esters, thiophosphoric acid esters and/or dithiophosphoric acid esters in an amount of 0.5 - 300 g/l dissolved in a mixture comprising 2 - 300 g/l aliphatic hydrocarbons and sunflower oil in an amount necessary to 1000 ml and comprising further alkylaryl polyglycol ether in an amount of 2 - 100 g/l, preferably 15 - 60 g/l as additive enabling that the initial wetting (contact) angle of the formulation on the plant surface is greater than 13°, it is greater than 6° after 20 minutes and it is at least 2° after 120 minutes.

The formulations according to the invention contain the following natural or synthetic pyrethroids: allethrin, bifenthrin, bioallethrin, bioresmethrin, chinmix, cyfluthrin, cyhalothrin, cypermethrin, deltamethrin, fenpropethrin, fenvalerate, flycythrinate, fluvalinate, permethrin, phenothrin, resmethrin, tetramethrin, tralomethrin, and/or transmix.

The formulations according to the invention contain the following phosphoric acid esters: trichlorfon, propaphos, dicrotophos, phosphamidon, profenophos; the following thiophosphoric acid esters: acephate, parathion, methylparathion, chlorpyriphos, methamidophos, demeton, oxy-demeton-methyl, fenitrotion, EPN, triazophost, pirimiphos-ethyl, mevinphos, quinalpos, fenthion, pirimiphos-methyl and/or the following dlthiophosphoric acid esters: dimethoate, azinphos-methyl, azinphos-ethyl, phosmet, malathion, phenthoate, methidathion and/or phosalon.

In the formulation according to the invention preferably nonylphenol polyglycol ether (EO = 6 - 10) is used as alkylaryl polyglycol ether and the aliphatic hydrocarbon mixture is preferably a mixture of $C_{10-15}$ hydrocarbons containing 45-50% naphthene and having a flash point higher than 58 °C.

The oil used in the preparation according to the invention is preferably a contamination-free, double-filtered sunflower oil (pharmacopeia).

Those compositions are the most effective which enable - due to the modifying components - the formation of such a contact angle which can ensure the adhesion of the drops located on a vertical or horizontal plant surface or on a plant surface between said two geometrical positions and can inhibit the absorption thereof within 2 hours.

The experimental data presented in the following Examples prove that the efficiency of these compositions surpasses that of the comparative compositions containing no modifying compound.

The contact (wetting) angle depends on the interfacial tension between the oil drop and the given plant surface and further on the gravity related to the drop size (Pestic. Sci., 1987. 15:382) on the quality of the oil (Pestic. Sci., 1987. 20:241) and on different physical parameters, e.g. temperature, humidity (Pestic. Sci., 1987. 20:105). These all have an influence on the spreading of the drop and on the penetration of the active ingredient into the epicuticular layer of wax.

In the following Examples the behaviour of drops having a diameter of 80 $\mu$m and prepared under constant physical parameters from a preferred oil mixture was examined on different plant surfaces in the presence of different penetration modifying materials used individually or in mixture.

During our experiments the mixtures of different vegetable oil, e.g: soya, rape, palm, sunflower oil and mineral oils, e.g. different aromatic and aliphatic hydrocarbons and the mixtures thereof were examined as solvent mixtures. As plant surface the young foliage leaves of lucerne (Medicago sativa) and sunflower (Helianthus annus) were used. The contact angle and absorption time of the plant protecting ULV formulations were determined by optical method and the retention time was followed by the change of the contact angle in time.

It has been established that the contact angle of the solution obtained by the use of the mixture of sunflower oil and mixed hydrogenated aliphatic hydrocarbons is 7 - 10°, however an even lower value (7-1°) may be obtained by the use of other mixtures. Surprisingly even the penetration time of the compositions having a relatively great contact angle (10°) is only 15-20 minutes. The penetration of the ULV formulations having a contact angle below 7° takes place very quickly, in 2 - 15 minutes.

Accordingly such solvent mixture was used as starting solvent which shows - in the form of the ULV formulation - a contact angle of 7° - 10°. The following composition meets e.g. this requirement:

0,5 - 30 g/l of pyrethroid and/or 0.5- 300 g/l phosphoric acid ester
2 - 300 g/l of aliphatic hydrocarbon mixture sunflower oil to 1000 ml.

Using the above composition the contact angle measured on the surface of the plant model was 7° - 10° and the penetration time was 15 - 20 minutes.

As aliphatic hydrocarbon mixture Exxsol D 60 and D 100 products (mixture of $C_{10-15}$ hydrocarbons, naphthene content: 45 - 50 %, flash point: 50° - 100 °C) was used.

The used sunflower oil was of pharmacopeia quality, double filtered.

Several additives modifying the interfacial behaviours were examined in different concetration, and the contact angle and the change thereof in time was determined on the leaves of lucerne and sunflower plants.

The following materials were used as penetration modifying components:

Ionic type materials:

- Ca salt of dodecylbenzenesulfonic acid,

Non-ionic type materials:

- fatty alcohol polyglycol ethers:
  compounds of formula $RX(CH_2CH_2O)_yH$, wherein if X = 0, then RO = coconut oil alcohol, oleyl alcohol, pine oil alcohol, isotridecyl alcohol;

- alkyl-aryl polyglycol ethers, corresponding to the above general formula, wherein if R is alkyl phenol then it stands for nonylphenol or tributylphenol and y = 2-12,
- fatty amine polyglycol ethers, wherein if X = NH then RNH is coconut oil, stearyl, oleyl, pine oil amine and y = 2-12;
- propylene oxide - ethylene oxide block polymer (EO = 10-12)

It has been found that the ULV formulations corresponding to the following composition:

0,5 - 30 g/l of pyrethroid and/or 0.5- 300 g/l phosphoric acid ester,

2 - 300 g/l of mixed aliphatic hydrocarbon,

15 - 60 g/l of alkyl aryl polyglycol ether (EO = 6 - 10) and

sunflower oil to 1000 ml,

have an initial contact angle on the surface of a plant model of 13 - 21°, after 20 minutes of 6° - 10° and after 120 minutes of 2 - 3° and it decreases to 0° only after 130 minutes.

When using any other additives in a concentration of 15 - 60 g/l or the formulation tested contains no additives, the initial contact angle determined on the plant surfaces was smaller than 16° and 0° after 20 minutes in case of lucerne and smaller than 8° in case of maize and 0° after 120 minutes in both cases.

It will be proved by the following Examples that the penetration time of the spray drops can significantly be increased by the use of the alkyl aryl polyglycol ethers and this results in the significant increase of the efficiency of the active ingredient contained in the formulations. Due to this enhanced efficiency the specific dose (g active ingredient/ha) may be reduced which is very advantageous from the point of view of the costs of plant protection and of the moderation of the pesticide-load. The active ingredients available for a longer time as potent pesticides are further very advantageous as they may be utilized to control resistant populations.

The definitions of the abbreaviations used in the following Tables are the following:

| | | |
|---|---|---|
| CIP = cipermethrin | = | alpha-cyano-3-phenoxy-benzyl-3-(2,2-dichlorovinyl)-2,2-dimethyl-cyclopropane carboxylate |
| CHX = "chihmix" | = | a mixture in a ratio of 40:60 of the following isomers of cypermethrin: (IRcisS + IScisR) : IRtransS + IStrans = = 40:60 |
| QUI = quinalphos | = | 0,0-diethyl-0-chinoxalin-2-yl-phosphorothioate |
| DIA = diazinon | = | 0,0-diethyl-0-2-isopropyl-6-methyl-pirimidin-4-yl-phosphorothioate |
| TRIA = triazophos | = | 0,0-diethyl-0-1-phenyl-1H-1,2,4-triazol-3-yl-phosphorothioate |
| MET = methidathion | = | S-2,3-dihydro-5-methoxy-2-oxo-1,3,4-thiadiazol-3-yl-methyl-0,0-dimethyl-phosphorodithioate |
| HEPT = heptenophos | = | chlorobicyclo[3,2,0]hepta-2,6-dien-6-yl-dimethylphosphate |
| PHOS = phosalone | = | S-6-chloro-2,3-dihydro-2-oxobenzene-oxazol-3-yl-methyl-0,0-diethyl-phosphorodithicate |
| SF | = | synergistic factor |
| PBO | = | piperonyl butoxide |
| Transmix | = | mixture in a ratio 50:50 of the IRtransS and IStransR isomers of cypemeth-rin |
| EPN | = | O-ethyl-O-4-nitrophenyl-phenyl-phosponthioate |

The invention is illustrated by the following Examples.

## Example 1

| | | |
|---|---|---|
| Chinmix | | 7.5 g/l |
| Exxsol D 100 | | 250 g/l |
| Sunflower oil | to | 1000 ml |

The composition is prepared by using a technology generally known for preparing solutions, i.e. the sunflower oil is admixed with the Exxsol D 100 and the active ingredient is dissolved in the mixture obtained at 15 - 30 °C, thereafter the solution is stirred for 30 minutes.

The contact angle is determined using a microscope having, a magnification of 30x and equipped with an optical cross spider. The displacement of the cross spider is determined by fine scale angular displacement indicator.

| Wetting time | Contact angle | |
|---|---|---|
| | lucerne | sunflower |
| 0. minute | 10° | 6° |
| 20. minute | 0° | 8° |
| 120. minute | 0° | 0° |

**Example 2**

| Chinmix | 0.75 g/l |
|---|---|
| Exxsol D 100 | 5 g/l |
| sunflower oil | to 1000 ml |

The composition is prepared and the contact angle is determined as described in Example 1.

| Wetting time | Contact angle | |
|---|---|---|
| | lucerne | sunflower |
| 0. minute | 8° | 4° |
| 20. minute | 0° | 5° |
| 120. minute | 0° | 0° |

**Example 3**

| Chinmix | 7.5 g/l |
|---|---|
| Nonylphenol polyglycol ether (EO = 8) | 60 g/l |
| Exssol D 100 | 250 g/l |
| sonflower oil | to 1000 ml |

The composition is prepared by using the technology generally known for preparing solutions, i.e. the sunflower oil is admixed with the Exssol D 100, thereafter the nonylphenol polyglycol ether is added, homogenized and the active ingredient is dissolved in the mixture thus obtained. The contact angle is determined as described in Example 1.

| Wetting time | Contact angle | |
|---|---|---|
| | lucerne | sunflower |
| 0. minute | 19° | 21° |
| 20. minute | 6° | 15° |
| 120. minute | 3° | 6° |

**Example 4**

| Transmix | 0.75 g/l |
|---|---:|
| Nonylphenol polyglycol ether (EO = 8) | 30 g/l |
| Exxsol D 100 | 5 g/l |
| Sunflower oil | to 1000 ml |

The composition is prepared as described in Example 3, and the contact angle is determined according to Example 1.

| Wetting time | Contact angle | |
|---|---|---|
| | lucerne | sunflower |
| 0. minute | 19° | 20° |
| 20. minute | 6° | 15° |
| 120. minute | 2° | 4° |

**Example 5**

| Chinmix | 7.5 g/l |
|---|---:|
| Fatty alcohol polyglycol ether (EO = 5) | 60 g/l |
| Exxsol D 100 | 250 g/l |
| Sunflower oil | to 1000 g/l |

The composition is prepared as described in Example 3 and the contact angle is determined according to Example 1.

| Wetting time | Contact angle | |
|---|---|---|
| | lucerne | sunflower |
| 0. minute | 9° | 4° |
| 20. minute | 6° | 2° |
| 120. minute | 0° | 0° |

**Example 6**

| Chinmix | 7.5 g/l |
|---|---:|
| Alkyl aryl polyglycol ether (EO = 2) | 30 g/l |
| Exxsol D 100 | 250 g/l |
| Sunflower oil | to 1000 g/l |

The composition is prepared as described in Example 3 and the contact angle is determined according to Example 1.

6

| Wetting time | Contact angle | |
|---|---|---|
| | lucerne | sunflower |
| 0. minute | 8° | 6° |
| 20. minute | 3° | 0° |
| 120. minute | 0° | 0° |

**Example 7**

To a measuring flask of 1000 ml 240 g quinalphos and 35 g nonylphenol polyglycol ether (EO = 10) are added and filled up to 1000 ml with the 1:5 mixture (v/v) of Exxsol D 100 and sunflower oil. The mixture obtained is homogenized at 50 °C in the flask and after complete dissolution is cooled to 20 °C. The contact angle is determined as described in Example 1.

| Wetting time | Contact angle | |
|---|---|---|
| | lucerne | sunflower |
| 0. minute | 18° | 20° |
| 20. minute | 9° | 18° |
| 120. minute | 6° | 11° |

**Example 8**

In the mixture of 80 g piperonyl butoxide and 23 g nonylphenol polyglycol ether (EO = 10) 10 g chinmix and thereafter 240 g quinalphos are dissolved at 45 °C. The solution thus obtained is filled up to 1000 ml with the 1:6 mixture (v/v) of Exxsol D 60 and sunflower oil.

| Wetting time | Contact angle | |
|---|---|---|
| | lucerne | sunflower |
| 0. minute | 16° | 18° |
| 20. minute | 8° | 12° |
| 120. minute | 4° | 8° |

**Example 9**

| | |
|---|---|
| Tetramethrin | 10 g/l |
| Nonylphenol polyglycol ether (EO = 8) | 60 g/l |
| Exxsol D 100 | 250 g/l |
| Sunflower oil | to 1000 ml |

The composition is prepared as described in Example 3 and the contact angle is determined according to Example 1.

| Wetting time | Contact angle | |
|---|---|---|
| | lucerne | sunflower |
| 0. minute | 17° | 23° |
| 20. minute | 7° | 15° |
| 120. minute | 3° | 7° |

## Example 10

| Cypermethrin | | 20 g/l |
|---|---|---|
| Nonylphenol polyglycol ether (EO = 10) | | 15 g/l |
| Exxsol D 100 | | 200 g/l |
| Sunflower oil | to | 1000 ml |

The composition is prepared as described in Example 3 and the contact angle is determined according to Example 1.

| Wetting time | Contact angle | |
|---|---|---|
| | lucerne | sunflower |
| 0. minute | 17° | 24° |
| 20. minute | 11° | 10° |
| 120. minute | 8° | 8° |

## Example 11

| Cypermethrin | | 2 g/l |
|---|---|---|
| Nonylphenol polyglycol ether (EO = 10) | | 20 g/l |
| Exxsol D 100 | | 48 g/l |
| Sunflower oil | to | 1000 ml |

The composition is prepared as described in Example 3 and the contact angle is determined according to Example 1.

| Wetting time | Contact angle | |
|---|---|---|
| | lucerne | sunflower |
| 0. minute | 21° | 23° |
| 20. minute | 7° | 14° |
| 120. minute | 3° | 9° |

8

Biological Examples

## Example 12

Activity on potato beetle

Petri dishes (∅ 9 cm) are lined with leaves of potato leaves originated from shoots which had not been treated with insecticides previously and sprayed with the compositions described above. The treatment is carried out with a spraying machine (ULVA-system) modified for laboratory purpose, having a rotating disc and equipped with a speed governor. On an average 28 drops, having a diameter of 80 $\mu$m, are applied to every $cm^2$. After different drying time larvae of potato beetle (Leptinotarsa decemlienata SAY) of third larval stage are placed onto the treated surfaces and 5 hours later the number of the intoxicated, ataxic larvae are determined. Four replicates, each using 15 larvae, are carried out. The results obtained and expressed in percentage are summarized in Table 1.

## Table 1

| Drying time after the spraying (min) | Control[*] | Compositions according to | | | | | |
|---|---|---|---|---|---|---|---|
| | | Ex 1 | Ex 3 | Ex 5 | Ex 6 | Ex 8 | Ex 10 |
| | | knockdown % | | | | | |
| 0 | 0 | 70 | 100 | 70 | 75 | 100 | 100 |
| 20 | 0 | 20 | 80 | 35 | 30 | 100 | 100 |
| 120 | 0 | 0 | 50 | 5 | 0 | 85 | 90 |

[*] Composition according to Example 1, containing no active ingredient

EP 0 336 433 B1

## Example 13

Activity on the worms of yellow clover

The treatments are carried out as described in Example 12, except that sunflower leaves are used. After the different drying times worms of yellow clover (Heliothis maritima GRASLIN) of $L_3$ - $L_4$ larval stage, collected on field, are placed onto the treated leaves and 5 hours later the mortality is determined. The treatments are carried out in two replicates, each using 20 larvae. The results obtained are summarized in Table 2.

## Table 2

| Drying time after the spraying (min) | Control[x] | Ex 1 | Ex 3 | Ex 5 | Ex 6 | Ex 8 | Ex 10 |
|---|---|---|---|---|---|---|---|
| | | | | knockdown % | | | |
| 0 | 0 | 90 | 100 | 100 | 100 | 100 | 100 |
| 20 | 0 | 30 | 100 | 35 | 40 | 100 | 100 |
| 120 | 0 | 0 | 65 | 0 | 0 | 100 | 100 |

x Composition according to Example 1, containing no active ingredient.

EP 0 336 433 B1

**Example 14**

Activity against plant-lice

The activity of the composition according to Example 3 is tested in inudstrial scale in a 10 ha plot on winter wheat against plant lice.

A commercial composition, DECIS ULV is used as comparative composition. The application was carried out from helicopter at the time of milky stage (milky ripening) (at June 22) using a special ULV head. The evaluation was carried out according to the Banks scale 2 and 7 days after the treatment using 8 x 25 marked ears. On the basis of the scale values the infection was calculated, thereafter the average number of the living individuals was expressed by the aid of an empirical table. The calculation of the percentage efficacy was made by the Henderson-Tilton equation.

## Table 3

| Treatment | dose l/ha | Number of the living individuals | | | efficacy in % (Henderson-Tilton) | |
|---|---|---|---|---|---|---|
| | | before treatment | 2 days after treatment | 7 days after treatment | 2. day | 7. day |
| CYPERIL-S[x] | 1.5 | 30.1 | 0.9 | 0.5 | 97.0 | 80.3 |
| DECIS ULV | 1.5 | 30.0 | 1.4 | 1.0 | 95.6 | 62.7 |
| Untreated control | - | 26.9 | 28.0 | 2.4 | - | - |

[x] Composition according to Example 3.

### Example 15

To a measuring flask of 1000 ml 400 g of Phosalone and 25 g of nonylphenol polyglycol ether (EO = 10) are added and filled up to 1000 ml with the 1:1:5 mixture (v/v) of Solvesso 200, Exxsol D 100 and sunflower oil. The mixture obtained is homogenized at 25 °C.

14

The contact angle is determined as described in Example 1.

| Wetting time | Contact angle | |
|---|---|---|
| | lucerne | sunflower |
| 0. minute | 18° | 22° |
| 20. minute | 8° | 18° |
| 120. minute | 6° | 7° |

## Example 16

According to Example 15 the following composition is prepared:

| | |
|---|---|
| Phenitrothion | 300 g/l |
| Nonylphenol polyglycol ether (EO = 8) | 50 g/l |
| Exxsol D 100 | 250 g/l |
| Sunflower oil | to   1000 ml |

The contact angle of the above preparation is determined as described in Example 1.

| Wetting time | Contact angle | |
|---|---|---|
| | lucerne | sunflower |
| 0. minute | 22° | 24° |
| 20. minute | 7° | 15° |
| 120. minute | 4° | 6° |

## Example 17

| | |
|---|---|
| Malathion | 300 g/l |
| Nonylphenol polyglycol ether | 25 g/l |
| Solvesso 200 | 100 g/l |
| Exxsol D 100 | 250 g/l |
| Sunflower oil | to   1000 ml |

The composition is prepared according to Example 15 and the contact angle is determined as described in Example 1.

| Wetting time | Contact angle | |
|---|---|---|
| | lucerne | sunflower |
| 0. minute | 18° | 21° |
| 20. minute | 6° | 15° |
| 120. minute | 3° | 7° |

**Example 18**

| Phosalon | 400 g/l |
|---|---|
| Chinmix | 8 g/l |
| Nonylphenol polyglycol ether (EO = 10) | 15 g/l |
| Exxsol D 100 | 250 g/l |
| Sunflower oil | to    1000 ml |

The composition is prepared according to Example 15 and the contact angle is determined as described in Example 1.

| Wetting angle | Contact angle | |
|---|---|---|
| | lucerne | sunflower |
| 0. minute | 18° | 20° |
| 20. minute | 7° | 16° |
| 120. minute | 3° | 7° |

**Example 19**

| Deltamethrin | 5 g/l |
|---|---|
| Nonylphenol polyglycol ether (EO = 10) | 20 g/l |
| Solvesso 200 | 100 g/l |
| Exxsol D 100 | 250 g/l |
| Sunflower oil | to    1000 ml |

The composition is prepared according to Example 15 and the contact angle is determined as described in Example 1.

| Wetting time | Contact angle | |
|---|---|---|
| | lucerne | sunflower |
| 0. minute | 17° | 18° |
| 20. minute | 7° | 12° |
| 120. minute | 3° | 9° |

**Example 20**

| Malathion | 300 g/l |
|---|---|
| Deltamethrin | 5 g/l |
| Nonylphenol polyglycol ether (EO = 8) | 20 g/l |
| Solvesso 200 | 100 g/l |
| Exxsol D 100 | 250 g/l |
| Sunflower oil | to    1000 ml |

The composition is prepared according to Example 15 and the contact angle is determined as described in Example 1.

16

| Wetting time | Contact angle | |
|---|---|---|
| | lucerne | sunflower |
| 0. minute | 21° | 24° |
| 20. minute | 8° | 15° |
| 120. minute | 4° | 8° |

## Claims

1. ULV plant protecting insecticidal formulation containing
   0.5 - 30g/l of natural or synthetic pyrethroids or 0.5 - 300 g/l of phosphoric acid ester, thiophosphoric acid ester or dithiophosphoric acid ester dissolved in the mixture containing 2 - 300 g/l of a $C_{10-15}$ hydrocarbon mixture containing 45-50 % naphtène having a flash point of 50 to 100°C and sunflower oil in an amount necessary to 1000 ml comprising 2 - 100 g/l, preferably 15 - 60 g/l of nonylphenol polyglycol ether (EO = 6-10) as further additive, whereby the initial contact angle of the formulation on the plant surface is greater than 13°, after 20 minutes it is greater than 6° and after 120 minutes it is still at least 2°.

2. ULV plant protecting formulation as claimed in Claim 1 which comprises allethrin, bifenthrin, bioallethrin, bioresmethrin, chinmix, cyfluthrin, cyhalothrin, cypermethrin, deltamethrin, fenpropathrin, fenvalerate, flycythrinate, fluvalinate, permethrin, phenothrin, resmethrin, tetramethrin, tralomethrin and /or transmix as synthetic pyrethroid.

3. ULV plant protecting formulation as claimed in Claim 1, which comprises trichlorforn, propaphos, dicrotophos, phosphamidon, profenophos, monocrotophos as phosphoric acid ester and acephate, parathion, methylparathion, chlorpyriphos, demeton, oxy-demethonmethyl, fenitrothion, EPN, triazophos, pirimiphos-methyl, mevinphos, quinalphos, fenthion as thiophosphoric acid ester, and/or dimethoate, azinphos-methyl, azinphos-ethyl, phosmet, malathion, phentoate, methidathion and /or phosalon as dithiophosphoric acid ester.

4. ULV plant protecting formulation as claimed in any one of Claims 1 - 3 which comprises contamination-free, double-filtered sunflower oil (pharmacopeia).

## Patentansprüche

1. ULV insektizide Pflanzenschutz-Formulierungen, die
   0,5 - 30 g/l nacürliche oder synthetische Pyrethroide oder
   0,5 - 300 g/l Phosphorsäureester, Triphosphorsäureester oder Dithiophosphorsäureester in der Mischung gelöst enthalten, die
   2 - 300 g/l einer $C_{1-15}$ Kohlenwasserstoffmischung, die 45-50% Naphthen mit einem Flammpunkt von 50-100°C und Sonnenblumenöl in einer bis zu 1000 ml benötigten Menge enthält, und
   2 - 100 g/l, vorzugsweise 15 - 60 g/l, Nonylphenol-polyglykolether (EO = 6-10) als weiteres Additiv umfaßt, wobei der initiale Kontaktwinkel der Formulierung auf der Pflanzenoberfläche größer als 13°, nach 20 Minuten, größer als 6° ist und nach 120 Minuten noch mindestens 2° beträgt.

2. ULV Pflanzenschutz-Formulierungen nach Anspruch 1, dadurch gekennzeichnet, daß sie Allethrin, Bifenthrin, Bioallethrin, Bioresmethrin, Chinmix, Cyfluthrin, Cyhalothrin, Cypermethrin, Deltamethrin, Fenpropathrin, Fenvalerat, Flycythrinat, Fluvalinat, Permethrin, Phenothrin, Resmethrin, Tetramethrin, Tralomethrin und/oder Transmx als synthetische Pyrethroide enthalten.

3. ULV-Pflanzenschutz-Formulierungen nach Anspruch 1, dadurch gekennzeichnet, daß sie Trichlorforn, Propaphos, Dicrotophos, Phosphamidon, Profenophos, Monocrotophos als Phosphorsäureester und Acephat, Parathion, Methylparathion, Chlorpyriphos, Demeton, Oxydemethon-methyl, Fenitrothion, EPN, Triazophos, Primiphos-methyl, Mevinphos, Quinalphos, Fenthion als Thiophosphorsäureester und/oder Dimethoat, Azinphos-methyl, Azinphos-ethyl, Phosmet, Malathion, Phentoate, Methidathion und/oder Phosalon als Dithiophosphorsäureester enthalten.

**4.** ULV-Pflanzenschutz-Formulierungen nach den Ansprüchen 1,2 oder 3, dadurch gekennzeichnet, daß sie ein von Verunreinigungen freies, doppelt gefiltertes Sonnenblumenöl (Pharmacopeia) enthalten.

**Revendications**

**1.** Composition insecticide UFV de protection de plants contenant de 0,5 à 30 g/l de pyrethroides naturels ou synthétiques ou de 0,5 à 300 g/l d'ester d'acide phosphorique, d'ester d'acide thiophosphorique ou d'ester d'acide dithiophosphorique dissous dans un mélange contenant de 2 à 300 g/l d'un mélange hydrocarboné en $C_{10-15}$ renfermant de 45 à 50% de naphtène et ayant un point d'éclair de 50 à 100°C et de l'huile de tournesol q.s.p 1000 ml, comprenant de 2 à 100 g/l, de préférence de 15 à 60 g/l d'éther nonylphénolpolyglycolique (OE 6 à 10) à titre d'additif supplémentaire, de sorte que l'angle initial de contact de la composition sur la surface du plant est supérieur à 13°, après 20 minutes, il est supérieur à 6° et après 120 minutes, il est toujours d'au moins 2°.

**2.** Composition UFV de protection de plants selon la revendication 1, qui comprend le composé : allethrine, bifenthrine, bioallethrine, bioresmethrine, chinmix, cyfluthrine, cyhalothrine, cypermethrine, deltamethrine, fenpropathrine, fenvalérate, flycythrinate, fluvalinate, permethrine, phenothrine, resmethrine, tetramethrine, tralomethrine et/ou transmix à titre de pyréthroide synthétique.

**3.** Composition UFV de protection de plants selon la revendication 1, qui comprend du trichlorforn, propaphos, dicrotophos, phosphamidon, profenophos, monocrotophos à titred'ester d'acide phosphorique et de l'acéphate, parathion, méthylparathion, chlorpyriphos, demeton, oxy-demeton-méthyle, fenitrothion, EPN, triazophos, pirimiphos-méthyle, mevinphos, quinalpflos et fenthion à titre d'ester d'acide thiophosphorique et/ou du diméthoate, azinphos-méthyle, azinphos-éthyle, phosmet, malathion, phentoate, methidathion et/ou phosalon à titre d'ester d'acide dithiophosphorique.

**4.** Composition UFV de protection de plants selon l'une quelconque des revendications 1 à 3, qui comprend une huile de tournesol doublement filtrée et exempte de contamination (codex).